(19) **Europäisches Patentamt / European Patent Office / Office européen des brevets**

(11) **EP 4 617 649 A1**

(12) **EUROPEAN PATENT APPLICATION**
published in accordance with Art. 153(4) EPC

(43) Date of publication:
**17.09.2025 Bulletin 2025/38**

(21) Application number: **23887175.0**

(22) Date of filing: **25.10.2023**

(51) International Patent Classification (IPC):
**G01N 27/333** *(2006.01)*   **G01N 27/416** *(2006.01)*

(52) Cooperative Patent Classification (CPC):
**G01N 27/333; G01N 27/416**

(86) International application number:
**PCT/JP2023/038452**

(87) International publication number:
**WO 2024/101150 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.11.2022 JP 2022177764**

(71) Applicant: **HITACHI HIGH-TECH CORPORATION**
**Tokyo 105-6409 (JP)**

(72) Inventors:
• **KISHIOKA Atsushi**
  **Tokyo 100-8280 (JP)**
• **ONO Tetsuyoshi**
  **Tokyo 105-6409 (JP)**

(74) Representative: **Mewburn Ellis LLP**
**Aurora Building**
**Counterslip**
**Bristol BS1 6BX (GB)**

(54) **ION-SELECTIVE ELECTRODE, AND ELECTROLYTE CONCENTRATION MEASURING DEVICE**

(57)    Aiming at more easily improving ion selectivity and temporal stability of an ion-selective electrode based on an ion exchange membrane having a high density of fixed charge, the present disclosure proposes an ion-selective electrode for measuring a target ion contained in a sample liquid, the ion-selective electrode including: an electrode casing that stores an internal liquid; an internal electrode partially in contact with the internal liquid; and an ion-sensitive membrane that separates the sample liquid from the internal liquid, the ion-sensitive membrane being in contact with the sample liquid in at least a part of a first face, and being in contact with the internal liquid in at least a part of a second face different from the first face, and the first face of the ion-sensitive membrane being covered with an inert layer that suppresses an ion exchange reaction between the ion-sensitive membrane and the sample liquid (see FIG. 2).

## FIG. 2

EP 4 617 649 A1

**Description**

Technical Field

The present disclosure relates to an ion-selective electrode, and an electrolyte concentration measuring device equipped with the same.

Background Art

Potential difference measurement (potentiometry) with use of an ion-selective electrode (ISE) has been adopted in a wide range of fields including water analysis and medical field, since the method can quickly and easily quantify a specific ion concentration in a liquid. In particular in the medical field, the ion concentration is closely related to biological metabolic reactions, so that the method has been used for measuring specific ions contained in biological samples such as serum, urine and so forth, for use in diagnosis of hypertension symptoms, renal diseases, neurological disorders, and the like. Since clinical examination needs to consecutively analyze a large number of specimens, so that high-throughput automatic analyzer and electrolyte concentration measuring device equipped with the ion-selective electrode have been used on a daily basis.

Measurement items of the electrolyte concentration measuring device mainly include cations such as sodium ion and potassium ion, and anions such as chlorine ion. As for cations, compounds (ionophores) capable of selectively capturing specific cations such as crown ether and valinomycin have been found. The ion-selective electrode aimed at cations such as sodium or potassium has an ion-sensitive membrane that usually contains any of these ionophores, thus enjoying high ion selectivity.

On the other hand, as for anions, there is no known ionophore suitable for the ion-selective electrode of an automatic analyzer, for which high throughput, quick response and long-term stability are required, so that the ion-sensitive membranes with a variety of structures have been employed. As one of them, a Cl ion-sensitive membrane based on an ion exchange membrane with high charge density has been developed. For example, PTL 1 discloses a chlorine ion-sensitive membrane based on an anion exchange membrane, with the surface thereof coated with a condensate of meta-phenylenediamine and formaldehyde. PTL 2 discloses an anion-selective electrode, whose ion exchange membrane is covered with an anion-responsive epoxy amine resin, specifically on a face thereof in contact with a sample liquid.

Citation List

Patent Literature

PTL 1: JP 3812049 B
PTL 2: JP 6783704 B

Summary of Invention

Technical Problem

Some samples may contain a large amount of ions of other types besides the target ion, and such ions of other types may act as an interference factor against measurement of the ion concentration of the target ion to be measured. For example, serum (sample), one of a target analyte in clinical examination, contains a large amount of bicarbonate ion ($HCO_3^-$) besides chlorine ion ($Cl^-$) as the anion, and the bicarbonate ion interferes with the measurement of chlorine ion concentration. It is therefore important for the chlorine ion-selective electrode to lower the selectivity for bicarbonate ion.

On the other hand, as described previously, it is more technically difficult for the anion-selective electrode to improve the selectivity, as compared with the cation-selective electrode. This is because the ionophore suitable for the ion-selective electrodes for anions has not been found, unlike for cations.

Measurement targeted at cations, although usually employs the ion-sensitive membrane that contains the aforementioned ionophore, may alternatively employ an ion-sensitive membrane free of ionophore, for the ion-selective electrode.

In view of such situation, the present disclosure provides a technique of more easily improving ion selectivity and temporal stability of the ion-selective electrode based on an ion exchange membrane having a high density of fixed charge.

Solution to Problem

Aiming at solving the aforementioned problems, the present disclosure proposes an ion-selective electrode for measuring a target ion contained in a sample liquid, the electrode including: an electrode casing that stores an internal liquid; an internal electrode partially in contact with the internal liquid; and an ion-sensitive membrane that separates the sample liquid from the internal liquid, the ion-sensitive membrane being in contact with the sample liquid in at least a part of a first face, and being in contact with the internal liquid in at least a part of a second face different from the first face, and the first face of the ion-sensitive membrane being covered with an inert layer that suppresses an ion exchange reaction between the ion-sensitive membrane and the sample liquid.

Further features related to the present disclosure will become apparent from the description of the present specification and the accompanying drawings. In addition, the aspects of the present disclosure are achieved and implemented by an element, combination of a variety of elements, the following detailed description, and aspects of the appended claims.

The description of the present specification is merely illustrative, and does not limit the scope of claims or application examples of the present disclosure in any sense.

Advantageous Effects of Invention

The technology of the present disclosure can more easily improve the ion selectivity and temporal stability of the ion-selective electrode based on an ion exchange membrane having a high density of fixed charge.

Brief Description of Drawings

FIG. 1A is a front view of a flow-type ion-selective electrode 10.

FIG. 1B is a drawing illustrating an exemplary structure of a flow-type ion-selective electrode 10, viewed in A-A' cross section of FIG. 1A.

FIG. 1C is a drawing illustrating an exemplary structure of a flow-type ion-selective electrode 10, viewed in B-B' cross section normal to A-A' cross section.

FIG. 2 is an enlarged schematic drawing of an area indicated by a dotted rectangle 17-1 in FIG. 1C, illustrating a unique layer structure of an ion-sensitive membrane 17 of the embodiment.

FIG. 3 is a drawing illustrating an exemplary structure of an electrolyte concentration measuring device (flow-type) 100 equipped with the ion-selective electrode according to the present disclosure.

FIG. 4 is a flowchart for explaining operations for start-up of the electrolyte concentration measuring device 100.

FIG. 5 is a flowchart for explaining an operation of the electrolyte concentration measuring device 100 during consecutive analysis.

FIG. 6 is an enlarged schematic drawing of an area indicated by the dotted rectangle 17-1 in FIG. 1C, illustrating a unique layer structure of an ion-sensitive membrane 17 of this embodiment.

FIG. 7 is an enlarged view of the dotted rectangle 17-1 in FIG. 1C, illustrating a layer structure of an ion-sensitive membrane of Comparative Example 1.

FIG. 8 is an enlarged view of an area indicated by the dotted rectangle 17-1 in FIG. 1C, illustrating a layer structure of an ion-sensitive membrane of Comparative Example 2.

FIG. 9 is a drawing illustrating an exemplary cross-sectional structure of a stick-type ion-selective electrode 20 according to a third embodiment.

FIG. 10 is a graph illustrating results of response behaviors to aqueous solutions containing various types of ions at various levels of concentrations, when compared between an ion-selective electrode 10 structured as in a first embodiment, and an electrode of Comparative Example 1, both using PVC as a material for an inert layer 5.

FIG. 11A is a schematic drawing illustrating ion compositions inside an ion-sensitive membrane of Comparative Example 1, and in a sample liquid.

FIG. 11B is a schematic drawing illustrating ion compositions inside the ion-sensitive membrane 17 of the ion-selective electrode 10 having the inert layer 5, and in the sample liquid.

FIG. 12 is a chart summarizing calculation results of a slope, and ion selectivity coefficients of the individual interference ions against chlorine ion ($Cl^-$), derived from potential values relatively stabilized as seen in FIG. 10 after the second introduction of the individual sample liquids.

FIG. 13 is a diagram illustrating measurement results of selectivity coefficients of bicarbonate ion ($HCO_3^-$) to chlorine ion ($Cl^-$), when compared between the ion-selective electrode structured as in Comparative Example 1 (see FIG. 7), and the ion-selective electrode structured as in the first embodiment (see FIG. 2).

FIG. 14 is a diagram illustrating measurement results of selectivity coefficients of bicarbonate ion ($HCO_3^-$) to chlorine ion ($Cl^-$), when compared between the ion-selective electrode structured as in Comparative Example 2 (see FIG. 8), and the ion-selective electrode structured as in the second embodiment (see FIG. 6).

Description of Embodiments

The present embodiments relate to an ion-selective electrode for measuring an ion concentration in a liquid, and an electrolyte concentration measuring device including the same. An ion-sensitive membrane that constitutes an ion-selective electrode of each embodiment has an ion exchange membrane having a high charge density, and an inert layer (a layer formed of a non-ion-responsive material) formed on a face of the ion exchange membrane, on the side in contact with a sample that contains a target ion to be measured. Employment of such structure can suppress an ion exchange event, and can bring the ion selectivity of the ion-sensitive membrane close to its inherent level.

Embodiments of the present disclosure will be explained below, while referring to the attached drawings. In the attached drawings, any functionally similar elements may occasionally be denoted by the same reference numerals. Note that the attached drawings, although illustrating specific embodiments and exemplary implementation conforming to the principles of the present disclosure, are merely for the convenience of understanding the present disclosure, but by no means for limited interpretation.

Although the present embodiments will be described sufficiently in detail enough to allow a skilled person in the art to implement the present disclosure, it should be noted that modification or a variety of replacement of elements of the construction and structure of the present disclosure are acceptable, without departing from the scope and spirit of the technical idea of the present disclosure. The description below should not, therefore, be interpreted as being limited thereto.

(1) First Embodiment

A first embodiment will disclose a flow-type ion-selective electrode 10. Although an embodiment will be described herein while exemplifying a chlorine ion-selective electrode, the technology of the present disclosure is also applicable to an ion-selective electrode for measuring the concentration of other ion species ($Br^-$, $I^-$, $CN^-$, $Cd^{2+}$, $Cu^{2+}$, $Ag^+$, $S^{2-}$, $F^-$, $K^+$, $Ca^{2+}$, $NO_3^-$, $NH_4^+$, $Na^+$, for example) .

<Structure of Flow-Type Ion-Selective Electrode>

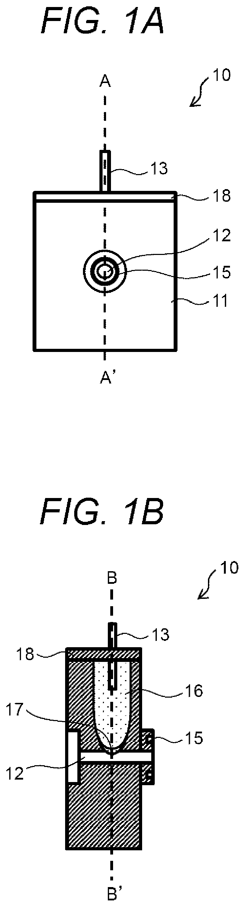

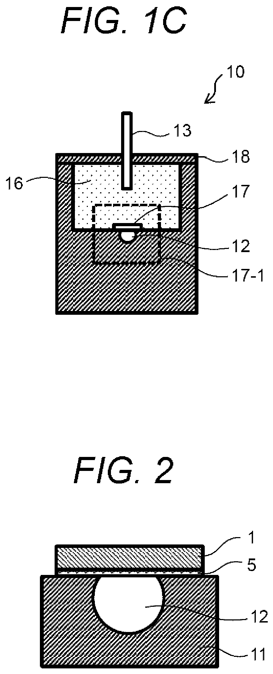

FIGS. 1A to 1C are drawings illustrating an exemplary overall structure of a flow-type ion-selective electrode 10 of the first embodiment. FIG. 1A is a front view of the flow-type ion-selective electrode 10. FIG. 1B is a drawing illustrating an exemplary structure of the flow-type ion-selective electrode 10, viewed in A-A' cross section of FIG. 1A. FIG. 1C is a drawing illustrating an exemplary structure of a flow-type ion-selective electrode 10, viewed in B-B' cross section normal to A-A' cross section.

The flow-type ion-selective electrode 10 has an electrode casing 11, an internal electrode 13, a flow channel 12 that extends through the electrode casing 11, a packing 15, an internal gel reservoir for pooling an internal gel 16, an ion-sensitive membrane 17, and a lid 18.

The flow channel 12 is allowed for passage (flow) of a sample liquid to be measured. The ion-sensitive membrane 17 is arranged so as to be in contact with the sample liquid. The internal gel (or internal liquid) 16 contains an electrolyte, and is pooled so as to fill the internal gel reservoir in the electrode casing 11. The internal electrode 13 is arranged so as to be in contact with the internal gel 16. The lid 18 is bonded to an opening of the electrode casing 11, in order to confine the internal gel 16 in the electrode casing. The packing 15 is arranged near an end opening of the flow channel 12 of the electrode casing 11, so as to be connectable to a flow channel of an electrolyte concentration measuring device (electrolyte concentration analyzer) described later, or some other electrode. The thus structured ion-selective electrode 10 is mounted on an electrolyte concentration measuring device. At the time of measurement, the internal electrode 13 is connected to a wiring of the device, thereby enabling measurement of potential ascribed to the concentration of the target ion to be measured contained in the sample liquid, and enabling analysis of concentration of the target ion to be measured.

<Exemplary Structure of Ion-Sensitive Membrane 17>

FIG. 2 is an enlarged schematic drawing of an area indicated by the dotted rectangle 17-1 in FIG. 1C, and illustrates a unique layer structure of the ion-sensitive membrane 17 of this embodiment.

(Procedures for Manufacturing Electrode)

(i) First, the ion-sensitive membrane 17 is based on an anion exchange membrane 1 having a cation densely immobilized thereon (given herein as an anion exchange membrane since the measurement is targeted at anion, which may alternatively be a cation exchange membrane if the measurement is targeted at cation). The anion exchange membrane 1 has chlorine ion ($Cl^-$) as a counter ion.

(ii) A solution of a later-described polymer dissolved in tetrahydrofuran (THF), which is a low-boiling solvent, is applied to a surface of the ion-sensitive membrane 17 on a side thereof in contact with the sample liquid. The THF is then evaporated off to form a thin polymer layer on the surface of the ion-sensitive membrane 17. This layer is referred to as an inert layer 5. The method for forming the inert layer 5 described herein is merely illustrative, to which any other method is applicable.

(iii) The anion exchange membrane 1 is then bonded to the electrode casing 11, so as to close an opening provided to the electrode casing 11.

(iv) Next, the internal gel reservoir of the electrode casing 11 is filled with the internal gel 16.

(v) Upon completion of filling of the internal gel 16, the lid 18 is welded to the electrode casing 11, and the internal electrode 13 is fixed so as to be in contact with the internal gel 16. Note in order to suppress evaporation of moisture in the internal gel 16, a face of the ion-sensitive membrane 17, on the side opposite to the flow channel 12, may be covered with a resin or the like.

(Exemplary Structure of Anion Exchange Membrane 1)

For the anion exchange membrane 1 that constitutes the ion-sensitive membrane 17, usable is a highly crosslinked polystyrene-based membrane having a quaternary ammonium ion as an anion exchange group, in which a woven fabric made of polyvinyl chloride (PVC) yarns serves as a reinforcing material.

The membrane is, however, not limited thereto, and may alternatively have primary to tertiary amino groups as the ion exchange group. A base material may alternatively be any other hydrocarbon resin such as polyolefin, or fluororesin, rather than the styrene-based one. The reinforcing material may alternatively be any other material such as polymer fiber or glass fiber. The membrane may even be free of reinforcing material.

The counter ion contained in the anion exchange membrane 1, although preferably an ion of the same species with the target ion to be measured, may be any other anion. Any membrane can demonstrate the effects of the technology of the present disclosure, as long as having a high density of fixed charge, even if the membrane is not the one having been widely used for the ion exchange membrane. Here, the high density means a level of charge density of approximately 0.1 to 10 mmol/g.

There is another known type of ion-sensitive membrane, different from the ion-sensitive membrane 17 of the present disclosure, called liquid membrane-type membrane. This is usually formed of a membrane made of soft PVC or the like, into which a lipophilic salt is dissolved as the fixed charge, and ionophore or the like for enhancing ion selectivity is contained. Such liquid film-type ion-sensitive membrane has a charge density of approximately 0.001 to 0.1 mmol/g.

(Exemplary Structure of Inert Layer 5)

The inert layer 5 acts to suppress an ion exchange reaction between the ion exchange membrane 1 and the sample liquid. The inert layer 5 has a charge density of 0.0001 mmol/g or smaller, for example, and is featured by its non-responsiveness to ion (formed of a non-ion-responsive material). That is, the material of the inert layer 5 is suitably an insulating material such as common polymer, and is water-insoluble so as not to dissolve into the sample liquid. It is also preferred that the inert layer 5 is formed of a material whose species is similar to the base material of the membrane or a support material of the membrane, or a material having a comparable solubility parameter value, so as to maintain adhesiveness to the ion exchange membrane. In a case where the inert layer 5 is formed by the method as described in this embodiment (by coating a polymer solution in tetrahydrofuran (THF) to form the inert layer 5, as described previously), suitably used is a material easily soluble in low-boiling solvent.

Materials applicable to the inert layer 5 include poly (vinyl chloride) (PVC); ethylene/vinyl acetate copolymer; poly(vinyl formal); and mixed materials of polymer and dioctyl adipate (DOA) as a plasticizer, such as PVC + DOA, ethylene/vinyl acetate copolymer + DOA, poly(ethyl methacrylate) + DOA, and poly(vinyl acetate) + DOA. Specific electrode performance will be described later. Although all of these materials can demonstrate the effects of the technology of the present disclosure, the materials are not limited to these types of polymer material and plasticizer. Any inert material is applicable, as long as it is non-ion-responsive and can suppress the ion exchange reaction between the ion exchange membrane 1 and the sample liquid.

As described above, the material of the inert layer 5 may be a polymer that contains element species of carbon and hydrogen. Furthermore, an element such as chlorine or oxygen may be contained, for the purpose of improving adhesion to the ion exchange membrane 1. The material is, however, not limited thereto, and may only be the one that satisfies the aforementioned conditions (capable of suppressing the ion exchange reaction; having a charge density of 0.0001 mmol/g or smaller; and is non-ion-responsive). The material is not limited to polymer material, and instead, low molecular weight material, inorganic material or the like, or even composite material having a plurality of materials mixed therein is applicable. Yet alternatively, the inert layer 5 may be formed of multiple layers.

The inert layer 5, constituted by an insulating material as described above, needs to be properly thin, in order to create a condition in which ion permeation is not fully blocked. More specifically, full blocking of the ion interaction will make the membrane non-ion-responsive, so that the inert layer 5 necessarily has a part with a thickness of 10 $\mu$m or smaller. On the other hand, the inert layer 5 necessarily has a thickness of 0.10 $\mu$m or larger, in order to achieve the suppressive effect on the ion exchange reaction.

The ion-selective electrode 10 structured as in this embodiment, having the inert layer 5 over the face of the ion exchange membrane 1, can suppress the ion exchange reaction between the ion exchange membrane 1 and the sample liquid, thus making it possible to bring electrode characteristic during practical use close to the inherent ion selectivity of the ion-sensitive membrane 17. On the other hand, in the structure disclosed in PTL 2 having the ion exchange membrane 1 covered with an epoxy amine resin, the epoxy amine resin per se is ion-responsive, so that the electrode characteristic is given by a response characteristic of the epoxy amine resin per se. Temporal degradation of the response characteristic of the epoxy amine resin therefore means degradation of the electrode characteristic. Hence, in pursuit of a temporally stable ion-selective electrode, also the epoxy amine itself is required to have temporally stable response characteristic. In contrast, the structure of this embodiment is less likely to degrade the characteristic, since the inert layer 5 does not inherently have ion responsiveness. The inert layer 5 may only have a function of suppressing the ion exchange reaction between the ion exchange membrane 1 and the sample liquid. Hence, the material for the inert layer 5 is selectable from a wide range of materials, provided that the aforementioned certain conditions (having a function of suppressing the ion exchange reaction; having a charge density of 0.0001 mmol/g or smaller; and being non-ion-responsive) are satisfied. Furthermore, it is also acceptable to select a material having a membrane surface onto which any component contained in a specimen is less likely to adhere.

Having described the chlorine ion-selective electrode in this embodiment, the present technique is also applicable to any other anion-selective electrode, or even to cation-selective electrode. As a matter of course, it is necessary to use the ion exchange membrane 1 suitable for a target ion to be measured. For example, the cation-selective electrode needs to employ an ion exchange membrane having a fixed charge opposite to that of the anion exchange membrane (e.g. sulfonic acid or carboxylic acid: immobilizing minus ion in the ion exchange membrane, and employing plus ion (a target ion to be measured, for example) as the counter ion).

<Exemplary Structure of Electrolyte Concentration Measuring Device>

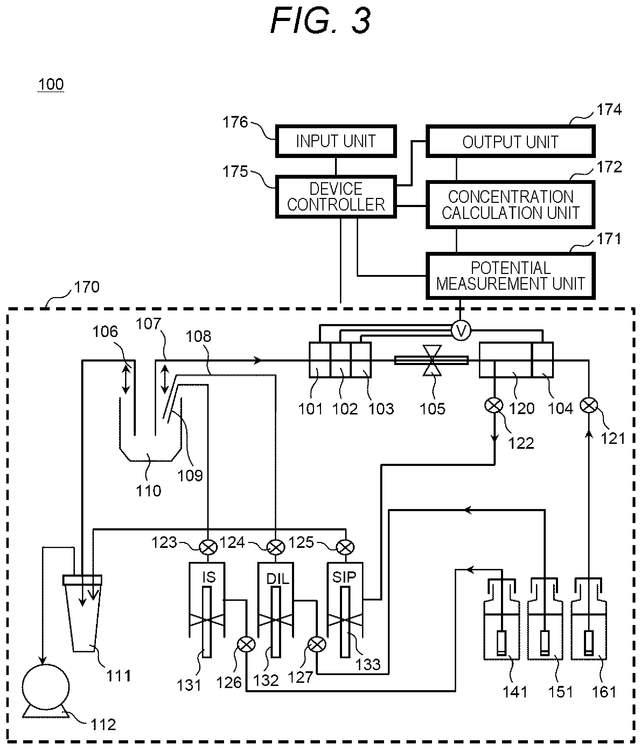

FIG. 3 is a drawing illustrating an exemplary structure of an electrolyte concentration measuring device (flow-type) 100 equipped with the ion-selective electrode according to the present disclosure. The electrolyte concentration measuring device 100 is a device structured to analyze concentration of three ion species of, for example, Na, K, and Cl. The electrolyte concentration measuring device 100 has a measurement unit 170, a potential measurement unit 171, a concentration calculation unit 172, an output unit 174, a device controller 175, and an input unit 176.

The measurement unit 170 has three types of ion-selective electrodes, which are a chlorine (Cl) ion electrode 101, a potassium (K) ion electrode 102, and a sodium (Na) ion electrode 103; and a reference electrode 104. A dilution tank 110 of the measurement unit 170 is a cup for temporarily pooling a diluted specimen in which a sample dispensed through a specimen nozzle (not illustrated) and a diluent dispensed through a diluent supply nozzle 108 are mixed, or an internal standard solution dispensed through an internal standard solution supply nozzle 109. A sipper nozzle 107, when brought down into the dilution tank 110 under control of the device controller 175, is structured to guide the diluted specimen or the internal standard solution pooled in the dilution tank 110, into flow channels of the ion-selective electrodes 101 to 103. A reference electrode solution is guided from a reference electrode solution bottle 161 into a flow channel of the reference electrode 104, with use of a sipper syringe pump 133. During this process, a vacuum suction nozzle 106 is brought down under control of the device controller 175, sips the diluted sample or the internal standard solution remaining in the dilution tank 110, and discharges the sample or the internal standard solution to the waste liquid tank 111.

<Detailed Operation of Mechanism Part>

Detailed operation of a mechanism part in the process of introduction of the liquid into flow channels of the ion-selective electrodes 101 to 103 will be described. For introducing the liquid pooled in the dilution tank 110 into the flow channels of the ion-selective electrodes 101 to 103, the device controller 175 closes a solenoid valve 121 and a solenoid valve 125, opens a pinch valve 105 and a solenoid valve 122, brings down the sipper nozzle 107 into the dilution tank, and draws a vacuum with the sipper syringe pump 133.

Next, for introducing the reference electrode solution into the flow channel of the reference electrode 104, the device controller 175 opens the solenoid valve 121, closes the pinch valve 105, and draws a vacuum with the sipper syringe pump 133. This makes the reference electrode solution introduced from the reference electrode solution bottle 161 into the flow channel of the reference electrode 104. For discharging the liquid collected in the sipper syringe pump 133, the device controller 175 then closes the solenoid valve 122, opens the solenoid valve 125, and pushes the sipper syringe pump 133.

The reference electrode solution introduced into the flow channel of the reference electrode 104 and the liquid introduced into the ion-selective electrodes 101 to 103 come into contact at a liquid junction 120. This makes the ion-selective electrodes 101 to 103 electrically contact with the reference electrode 104 through the liquid. In this state, the electromotive force (potential) between the reference electrode 104 and each of the ion-selective electrodes 101 to 103 changes, depending on the concentration of the target ion to be measured or the like in the liquid having been introduced into the flow channels of the ion-selective electrodes 101 to 103.

Information of the potential is acquired by the potential measurement unit 171. The concentration calculation unit 172 receives the measured potential from the potential measurement unit 171 at a stable timing suitable for concentration calculation, and calculates the concentration of the target ion to be measured. The output unit 174 displays a device operation status received from the device controller 175, and result of calculation by the concentration calculation unit 172. Through the input unit 176, the operator can enter specimen information, various parameters, device operation command and the like. Method of calculation will be detailed later.

<Device Start-Up Operations>

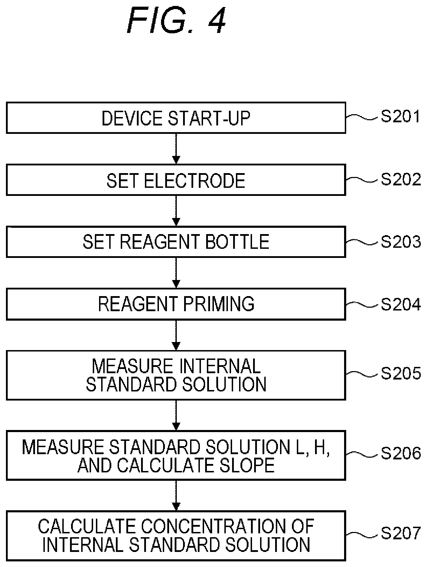

FIG. 4 is a flowchart for explaining operations for start-up of the electrolyte concentration measuring device 100.

(i) Outline of Start-Up Operations

The operator starts up the electrolyte concentration measuring device 100, by turning on a power switch, for example (S201). The operator then sets (mounts) the ion-selective electrodes 101 to 103 in the device 100 (S202), and also sets a reagent bottle in the device 100 (S203). In response to an operator's instruction, the device controller 175 performs reagent priming (replacing and filling the insides of the individual syringe pumps and the flow channels with a fresh reagent) (S204). In response to an operator's instruction, the device controller 175 also consecutively measures the internal standard solution, and checks that the potential of the electrodes is stable (S205). The device controller 175 also measures the standard solution having two levels of known concentration, to determine calibration curves of the ion-selective electrodes 101 to 103, and calculates the slopes (S206). The device controller 175 then calculates concentration of the internal standard solution (S207).

(ii) Details of S206 and S207

Now, specific operations in S206 and S207 will be described. The device controller 175 controls a dispensing nozzle (not illustrated) to dispense the standard solution with a known low concentration into the dilution tank 110 and then controls the diluent syringe pump 132 to dispense the diluent in the diluent bottle 151 into the dilution tank, thereby diluting the standard solution with a known low concentration at a preset ratio D. The device controller 175 then controls the sipper nozzle 107 to sip the diluted standard solution with a known low concentration in the dilution tank, and introduce the solution into the flow channels of the ion-selective electrodes 101 to 103. The device controller 175 then controls the sipper syringe pump 133 to introduce the reference electrode solution from inside the reference electrode solution bottle 161, into the flow channel of the reference electrode 104. At this time, the reference electrode solution and the diluted known low concentration standard solution come into contact at the liquid junction 120.

The device controller 175 uses the potential measurement unit 171 to measure each electromotive force between the reference electrode 104 and each of the ion-selective electrodes 101 to 103, during a period after the diluted standard solution was introduced into the flow channels of the electrodes, and then laid still. Meanwhile, the device controller 175 also controls the vacuum suction nozzle 106 to suck up the residual liquid in the dilution tank 110, and then dispenses the internal standard solution in the internal standard solution bottle 141 into the dilution tank 110. The device controller 175 then controls the sipper nozzle 107 to suck the internal standard solution in the dilution tank 110, to fill the flow channels of the ion-selective electrodes 101 to 103 with the internal standard solution. The device controller 175 controls the sipper syringe pump 133 to introduce the reference electrode solution from inside of the reference electrode solution bottle 161 into the flow channel of the reference electrode 104. Thereafter, the device controller 175 controls the potential measurement unit 171 to measure the electromotive force of each electrode, during a period after the internal standard solution was introduced into the flow channels of the electrodes, and then laid still. Meanwhile, the device controller 175 also controls the vacuum suction nozzle 106 to suck up the residual liquid in the dilution tank 110, and then controls a dispensing nozzle (not illustrated) to dispense the standard liquid with a known high concentration through into the dilution tank 110. The device controller 175 then uses a diluent syringe pump 132 to dispense the diluent in the diluent bottle 151 into the dilution tank 110, thereby diluting the standard liquid with a known high concentration at a preset ratio D.

The device controller 175 controls the sipper nozzle 107 to sip the diluted standard solution with a known high concentration in the dilution tank 110 and introduce the solution into the flow channels of the ion-selective electrodes 101 to 103. The device controller 175 then controls the sipper syringe pump 133 to introduce the reference electrode solution from inside the reference electrode solution bottle 161, into the flow channel of the reference electrode 104. At the liquid junction 120, the reference electrode solution and the diluted standard solution with a known high concentration come in contact. The device controller 175 then controls the potential measurement unit 171 to measure each electromotive force between the reference electrode 104 and each of the ion-selective electrodes 101 to 103, during a period after the diluted standard solution was introduced into the flow channels of the electrodes, and then laid still. Meanwhile, the device controller 175 controls the vacuum suction nozzle to suck up the residual liquid in the dilution tank, and then controls to dispense the internal standard solution in the internal standard solution bottle 141 into the dilution tank.

The device controller 175 then controls the sipper nozzle 107 to suck the internal standard solution in the dilution tank 110 and fill the flow channels of the ion-selective electrodes 101 to 103 with the internal standard solution, and controls the sipper syringe pump 133 to introduce the reference electrode solution from inside the reference electrode solution bottle 161 into the flow channel of the reference electrode 104. The device controller 175 then controls the potential measurement unit 171 to measure the electromotive force of each electrode, during a period after the internal standard solution was introduced into the flow channels of the electrodes, and then laid still. The device controller 175 also controls the vacuum suction nozzle to suck up the residual liquid in the dilution tank 110.

The electromotive force is thus obtained from three types of liquids including the low concentration standard solution, the high concentration standard solution, and the internal standard solution, with use of the potential measurement unit 171. The device controller 175 controls the concentration calculation unit 172 to calculate, according to a calculation formula below, slope sensitivity SL that corresponds to a calibration curve, from the electromotive force (EMF) received from the potential measurement unit 171.

(ii-1) Slope sensitivity

$$\mathrm{SL = (EMFH - EMFL)/(LogCH -LogCL)} \qquad (1)$$

SL: Slope sensitivity
EMFH: Measured electromotive force of standard solution with known high concentration
EMFL: Measured electromotive force of standard solution with known low concentration
CH: Known concentration value of high concentration standard solution
CL: Known concentration value of low concentration standard solution

The operations above are collectively referred to as calibration. The slope sensitivity SL corresponds to 2.303 × (RT/zF) in the Nernst equation (2) below. The slope sensitivity SL can be determined by calculation from temperature and valance of the target ion to be measured. The electrolyte concentration measuring device 100 determines the slope sensitivity SL unique to the electrode, by the aforementioned calibration for enhanced accuracy of the analysis.

$$\mathrm{E = E0 + 2.303 \times (RT/zF) \times log (f \times C)} \qquad (2)$$

where, E0 is a constant potential determined by a measurement system, z is a valence of target ion to be measured, F is the Faraday constant, R is the gas constant, T is an absolute temperature, f is an activity coefficient, and C is ion concentration.

(ii-2) Concentration of Internal Standard Solution

Next, the concentration of the internal standard solution is calculated from the slope sensitivity and the electromotive force of the internal standard solution.

$$\mathrm{CIS = CL \times 10^{a}} \qquad (3)$$

$$a = (EMFIS - EMFL)/SL \qquad (4)$$

wherein, CIS stands for concentration of the internal standard solution, and EMFIS stands for electromotive force of the internal standard solution.

Having described a specific method of calibration, the procedure is not limited thereto, and instead may rely upon any different procedure as long as it can introduce each of two or more types of liquids having different ion concentrations into the flow channel, and can measure the electromotive force. It is also acceptable to measure a reference sample having a composition simulating serum sample or urine sample, and to further correct the result of calibration.

<Consecutive Analysis Operation>

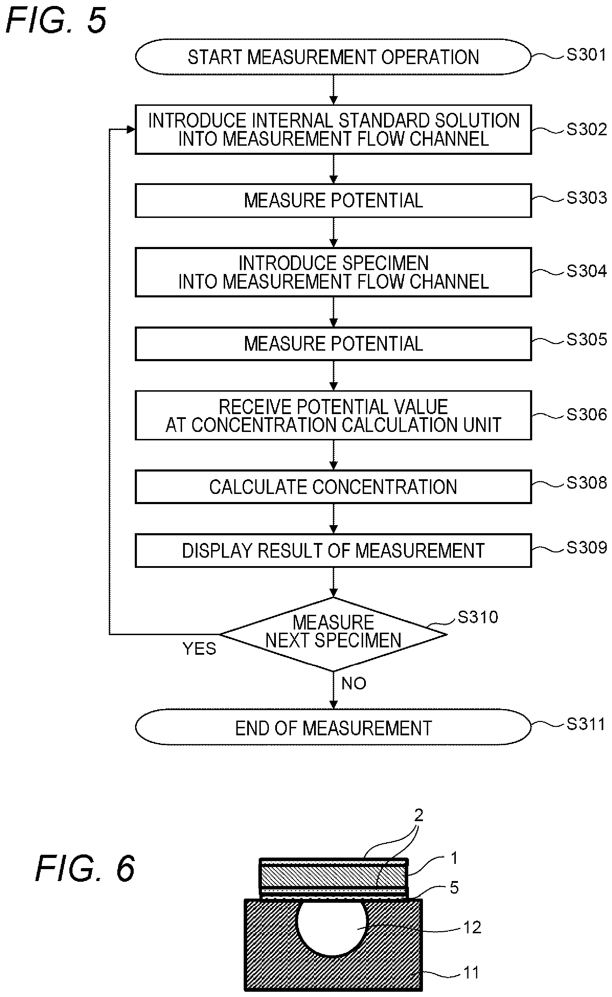

After calibration, the electrolyte concentration measuring device 100 analyzes a specimen such as serum or urine. FIG. 5 is a flowchart for explaining an operation of the electrolyte concentration measuring device 100 during consecutive analysis.

(i) Outline of Consecutive Analysis Operation

Upon start of measurement operation (S301), the device controller 175 controls to dispense the internal standard solution in the internal standard solution bottle 141, into the dilution tank 110. Next, the device controller 175 controls the sipper nozzle 107 to suck the internal standard solution in the dilution tank 110 to fill the flow channels of the ion-selective electrodes 101 to 103 with the internal standard solution, and controls the sipper syringe pump 133 to introduce the reference electrode solution from inside of the reference electrode solution bottle 161 into the flow channel of the reference electrode 104 (S302). The device controller 175 then controls the potential measurement unit 171 to measure the electromotive force of the individual electrodes (S303). Meanwhile, the device controller 175 controls the vacuum suction nozzle 106 to suck up the residual liquid in the dilution tank 110, and then controls a dispensing nozzle (not illustrated) to dispense the specimen into the dilution tank 110. The device controller 175 then controls the diluent syringe pump 132 to dispense the diluent in the diluent bottle 151 into a dilution tank to dilute the specimen at a preset ratio D. The device controller 175 further controls the sipper nozzle 107 to sip the diluted specimen (sample) in the dilution tank 110 to fill the flow channels of the ion-selective electrodes 101 to 103 with the specimen, meanwhile controls the sipper syringe pump 133 to introduce the reference electrode solution from inside the reference electrode solution bottle 161 into the flow channel of the reference electrode 104 (S304). The device controller 175 then controls the potential measurement unit 171 to measure the electromotive force of the individual electrodes (S305). The device controller 175 also controls the vacuum suction nozzle to suck up the residual liquid in the dilution tank 110.

The device controller 175 then receives the potential value (electromotive force) from the potential measurement unit 171 (S306), and controls the concentration calculation unit 172 to calculate the concentration of the specimen from the aforementioned slope sensitivity and concentration of the internal standard solution, according to the calculation formula below (S308).

(ii) Concentration of Specimen

$$C_S = CIS \times 10^b \qquad (5)$$

$$b = (EMFIS - EMFS)/SL \qquad (6)$$

where, CS stands for concentration of the specimen, and EMFS stands for measured electromotive force of the specimen.

Note that the present technology is applicable even if the device layout, structure of the reference electrode, measurement sequence, method of concentration calculation and the like are different from those of this embodiment.

(2) Second Embodiment

The second embodiment relates to a flow-type chlorine ion-selective electrode illustrated in FIGS. 1A to 1C, similarly to the first embodiment.

<Exemplary Structure of Ion-Sensitive Membrane 17>

FIG. 6 is an enlarged schematic drawing of an area indicated by the dotted rectangle 17-1 in FIG. 1C, illustrating a unique layer structure of the ion-sensitive membrane 17 of this embodiment. As illustrated in FIG. **6,** the ion-sensitive membrane 17 of the second embodiment has an anion exchange membrane 1, MPDA condensate layers 2 provided both on the upper and lower sides of the anion exchange membrane 1, and the inert layer 5 provided on a face of the MPDA condensate layer 2 in contact with a sample liquid.

(Procedures for Manufacturing Electrode)

(i) The ion-sensitive membrane 17 is based on the anion exchange membrane 1 having cations immobilized at high density. First, the anion exchange membrane 1 is immersed in a solution of meta-phenylenediamine dissolved in a solvent.

(ii) The anion exchange membrane 1 is then immersed in a mixed solution of formaldehyde and an inorganic acid, to form a condensate of meta-phenylenediamine (MPDA) and formaldehyde on the ion exchange membrane. This condensate layer is referred to as an MPDA condensate layer 2.

(iii) A solution of PVC dissolved in tetrahydrofuran (THF), which is a low-boiling solvent, is applied to the face, on the side in contact with the sample liquid, of the ion exchange membrane 1 having the MPDA condensate layer 2 formed thereon. THF is then evaporated off to form a thin polymer layer (inert layer).

(iv) The anion exchange membrane 1 is then bonded to the electrode casing 11, so as to close an opening provided to the electrode casing 11.

(v) The internal gel 16 is then filled inside the electrode casing 11. The lid 18 is welded to the electrode casing 11, and the internal electrode 13 is fixed so as to be in contact with the internal gel 16. Note it is also acceptable to cover the face of the ion-sensitive membrane 17, on the side opposite to the flow channel, with a resin or the like, in order to suppress moisture loss of the internal gel 16.

(Exemplary Structure of Anion Exchange Membrane 1)

Like in the first embodiment, the anion exchange membrane 1 that constitutes the ion-sensitive membrane 17 of the second embodiment may also be a highly crosslinked polystyrene-based membrane having quaternary ammonium ion as an anion exchange group, to which a woven fabric of polyvinyl chloride (PVC) yarns is used as a reinforcing material.

The membrane is, however, not limited thereto, and may alternatively have primary to tertiary amino groups as the ion exchange group, or may alternatively use any other hydrocarbon resin such as polyolefin, or fluororesin as a base material, rather than the styrene-based one. The reinforcing material may alternatively be any other material such as polymer fiber or glass fiber. The membrane may even be free of reinforcing material.

The counter ion contained in the anion exchange membrane 1, although preferably an ion of the same species with the target ion to be measured, may be any other anion. Any membrane can demonstrate the effects of the technology of the present disclosure, as long as having a high density of fixed charge, even if the membrane is not the one having been widely used for the ion exchange membrane. Here, the high density means a level of charge density of approximately 0.1 to 10 mmol/g.

<Exemplary Structure of Inert Layer 5>

The inert layer 5, being formed properly thin, can create a phase where ion permeation is not fully blocked, despite that the constituent material thereof is insulating. A thickness of 0.10 $\mu$m or larger is necessary for obtaining a suppressive effect on the ion exchange reaction. On the other hand, full blocking of the ion interaction will make the layer non-ion-responsive, so that the layer necessarily has a part with a thickness of 10 $\mu$m or smaller.

As described above, the ion-sensitive membrane 17 of the second embodiment is structured by adding the MPDA condensate layers 2 to the ion-sensitive membrane 17 of the first embodiment. The MPDA condensate layers 2 play a role of improving the ion selectivity of the ion-sensitive membrane 17 per se. Also in the second embodiment, formation of the inert layer 5 over the MPDA condensate layer 2 makes it possible to suppress the ion exchange reaction, and to bring the electrode characteristic in practical use close to the ion selectivity inherent to the membrane. Specific electrode performance will be described later.

Materials of the ion exchange membrane 1 and materials of the inert layer 5 used herein are selectable from various materials, similarly to as in the aforementioned first embodiment.

As described above, even having been treated for enhancing the ion selectivity (the MPDA condensate layers 2 have been formed), the ion exchange membrane 1 with high density of fixed charge can demonstrate the effects of the technology of the present disclosure, if structured to have the inert layer 5 formed thereon. The present technology is also applicable to other anion-selective electrodes or cation-selective electrodes.

<Exemplary Structure of Electrolyte Concentration Measuring Device>

The ion-selective electrode 10 according to the second embodiment is applicable to the aforementioned electrolyte concentration measuring device 100 (see FIG. 3), similarly to the ion-selective electrode 10 according to the first embodiment.

(3) Third Embodiment

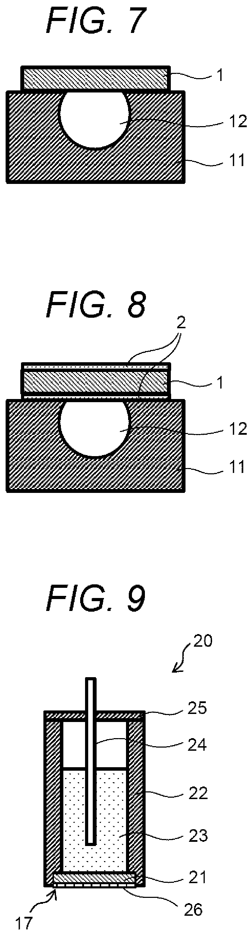

The third embodiment relates to a stick-type ion-selective electrode. FIG. 9 is a drawing illustrating an exemplary cross-sectional structure of a stick-type ion-selective electrode 20 according to the third embodiment.

<Exemplary Structure of Stick-Type Ion-Selective Electrode>

The stick-type ion-selective electrode 20 has an electrode casing 22 provided with an opening (opening illustrated in the bottom of FIG. 9). The stick-type ion-selective electrode 20 has the ion-sensitive membrane 17 arranged so as to close the opening. The face of the ion-sensitive membrane 17 in contact with the sample liquid is covered with an inert layer 26. The electrode further has an electrolyte-containing internal gel (internal liquid) 23 arranged so as to fill the inside of the electrode casing 22. An internal electrode 24 is arranged so as to be in contact with the internal liquid 23. A lid 25 is attached to confine the internal liquid 23 in the electrode casing 22. By mounting the ion-selective electrode 20 on the electrolyte concentration measuring device 100 (see FIG. 3), and by connecting the internal electrode 24 to a wiring of the device 100, it now becomes possible to measure the potential generated ascribed to the concentration of the target ion to be measured contained in the sample liquid, and to analyze the concentration of the target ion to be measured.

<Procedures for Manufacturing Electrode>

Hereinafter, a method for manufacturing the stick-type ion-selective electrode 20 of this embodiment will be described.
(i) First, the ion exchange membrane 21 having a fixed charge is covered with the inert layer 26. In this process, the entire face may be coated, or only a face which will be in contact with the sample may be coated.
(ii) The electrode casing 22, and the ion exchange membrane 21 covered with the inert layer 26 are then bonded, so as to close the opening provided to the electrode casing 22.
(iii) The internal gel (internal liquid) 23 is then filled inside the electrode casing 22, the lid 25 is attached, and the internal electrode 24 is fixed so as to be in contact with the internal gel 23.

Note that the ion exchange membrane 21 may be preliminarily subjected to a process of improving ion selectivity as described in the second embodiment (for example, formation of the MPDA condensate layer 2). The ion-sensitive membrane 17 of this embodiment has a layer structure similar to those in the first and second embodiments, so that the slope sensitivity, ion selectivity, electric resistance, service life, potential stability, and the like obtainable from the ion-sensitive membrane 17 are also equivalent.
Such stick-type ion-selective electrode 20 is usually immersed together with a reference electrode, in a container that contains a sample liquid, and the potential is measured while keeping the sample liquid in the container stirred with a stirrer. The structure of this embodiment can suppress the ion exchange reaction between the ion exchange membrane and the sample liquid, more largely as compared with the prior ion exchange membrane-based ion-selective electrode. Thereby, the structure can practically exhibit ion selectivity close to the level inherent to the ion-sensitive membrane, and can therefore make the measurement less susceptible to flow rate of the sample liquid. Other material composition, function, effect, and the like are same as those in the first and second embodiments.

(4) Comparative Example

<Comparative Example 1>

(i) Exemplary Structure of Ion-Selective Electrode

A schematic front view of a flow-type ion-selective electrode of Comparative Example 1 is given by FIG. 1A, similarly as the first embodiment. FIG. 1B is a drawing illustrating an exemplary structure that appears in A-A' cross section of FIG. 1A. FIG. 1C is a drawing illustrating an exemplary structure that appears in B-B' cross-section. The flow-type ion-selective electrode of Comparative Example 1 has a flow channel 12 that extends through the electrode casing 11. The sample liquid to be measured flows through the flow channel 12. The structure is equipped with an ion-sensitive membrane so as to be in contact with the sample liquid, and has the internal gel 16 that contains an electrolyte, arranged so as to fill the inside of the electrode casing 11. The internal electrode 13 is arranged so as to be in contact with the internal gel 16, and the lid 18 is attached to confine the internal gel in the electrode casing. The packing 15 is provided in the vicinity of the entrance of the flow channel 12 of the electrode casing, for the convenience of connection with the flow channel of the device or another electrode.

FIG. 7 is an enlarged view of the dotted rectangle 17-1 in FIG. 1C, illustrating a layer structure of the ion-sensitive membrane of this Comparative Example. The ion-sensitive membrane of Comparative Example 1 is constituted by an anion exchange membrane 1. The ion-sensitive membrane of Comparative Example 1 does not have the inert layer 5, unlike the ion-sensitive membrane 17 in the first and second embodiments.

(ii) Procedures for Manufacturing Ion-Selective Electrode

(ii-1) First, the anion exchange membrane 1 having an immobilized cation is welded to the electrode casing 11 with use of tetrahydrofuran (THF), which is a low-boiling solvent, so as to close the opening provided to the electrode casing 11.

(ii-2) The internal gel 16 is then filled inside the electrode casing 11, the lid 18 is welded, and the internal electrode 13 is fixed so as to be in contact with the internal gel 16.

The ion exchange membrane 1 used in Comparative Example 1 is a highly crosslinked polystyrene-based membrane having a quaternary ammonium ion as an anion exchange group, in which a woven fabric made of polyvinyl chloride (PVC) yarns is used as a reinforcing material.

The ion-selective electrode manufactured by such method is structured so that the ion exchange membrane 1 will be directly exposed to the sample liquid. Specific electrode performance will be described later.

<Comparative Example 2>

Comparative Example 2 relates to a flow-type ion-selective electrode illustrated in FIGS. 1A to 1C, similarly to Comparative Example 1. FIG. 8 is an enlarged view of an area indicated by the dotted rectangle 17-1 in FIG. 1C, illustrating a layer structure of an ion-sensitive membrane of Comparative Example 2.

(i) Procedures for Manufacturing Ion-Selective Electrode

(i-1) First, the anion exchange membrane 1 having a fixed cation is immersed in a solution of meta-phenylenediamine dissolved in a solvent, then immersed in a mixed solution of formaldehyde and an inorganic acid, to form a condensate of meta-phenylenediamine (MPDA) and formaldehyde on the ion exchange membrane 1.

(i-2) The ion exchange membrane 1 having formed thereon the MPDA condensate layers 2 is welded to the electrode casing 11, with use of tetrahydrofuran (THF), which is a low-boiling solvent, so as to close the opening provided to the electrode casing 11.

(i-3) The internal gel 16 is then filled inside the electrode casing 11, the lid 18 is welded, and the internal electrode is fixed so as to be in contact with the internal gel 16.

The ion exchange membrane 1 used in Comparative Example 2 is a highly crosslinked polystyrene-based membrane having a quaternary ammonium ion as an anion exchange group, in which a woven fabric made of polyvinyl chloride (PVC) yarns is used as a reinforcing material.

The ion-selective electrode manufactured by such method is structured so that the ion exchange membrane 1, treated with MPDA condensate, will be in contact with the sample liquid. Specific electrode performance will be described later.

(5) Exemplary Measurement (Example)

<Exemplary Measurement 1>

(i) Measurement Results

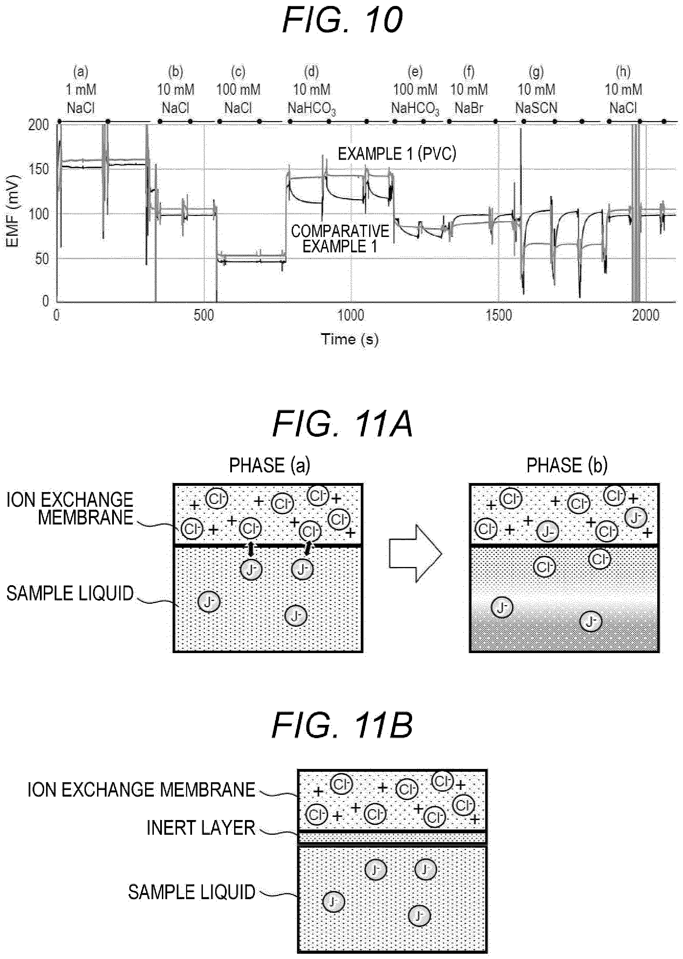

The ion-selective electrode 10 of the first embodiment structured to use PVC as a material for the inert layer 5, and the electrode of Comparative Example 1 were examined to find response behaviors to aqueous solutions containing various types of ions at various levels of concentration. FIG. 10 is a graph illustrating comparison results of the response behaviors. In the graph of FIG. 10, the abscissa plots time, and the ordinate plots the acquired potential (EMF: for anion-selective electrode whose slope sensitivity is negative, the smaller the value, the higher the response sensitivity).

Filled circles plotted at the top of the graph indicate timings of introduction of the individual sample liquid. The liquid was laid still except at the time of liquid introduction. The results teach that, even the electrode of Comparative Example 1 demonstrated temporarily stable potential, when laid still in aqueous NaCl solutions at different concentrations, as seen in sections from (a) to (c) in FIG. 10.

However, as seen in section (d) of FIG. 10, the electrode in 10 mM $NaHCO_3$ demonstrated sharp drop of potential immediately after the liquid was laid still, followed by a gradual change towards a plateau. Upon re-introduction of the $NaHCO_3$ aqueous solution of the same concentration, the potential drew a similar curve, starting from a nearly equal level. As seen in section (e) of FIG. 10, a negative potential change also occurred upon introduction of 100 mM $NaHCO_3$. In contrast as seen in section (f) of FIG. 10, the potential conversely demonstrated sharp rise upon introduction of 10 mM NaBr immediately after the liquid was laid still, followed by a gradual change towards a plateau. As seen in section (g) of FIG. 10, introduction of 10 mM NaSCN caused a more remarkable change in the potential. Re-introduction of the same solution reproduced the event. Lastly as seen in section (h) of FIG. 10, introduction of 10 mM NaCl resulted in nearly equal potential as in section (b) of FIG. 10.

In contrast, the ion-selective electrode 10 structured according to the first embodiment demonstrated a relatively stable potential in all types of solution (sections (a) to (h) in FIG. 10).

(ii) Reason Why the Inert Layer 5 Can Prevent Influence of Interfering Ions

The description herein will discuss a mechanism according to which the ion-selective electrode structured as in Comparative Example 1 (see FIG. 7) caused temporary change in the potential, but the ion-selective electrode 10 structured as in the first embodiment (see FIG. 2) did not, in the measurement of sample liquids that contain interfering ions.

FIG. 11A is a schematic drawing illustrating ion compositions inside the ion-sensitive membrane of Comparative Example 1, and in the sample liquid. In Comparative Example 1, there are a high concentration of cations (positive ions) immobilized in the ion exchange membrane 1 of the ion-sensitive membrane, together with chlorine ions ($Cl^-$) as the counter ion. Hence, when the membrane is brought into contact with a sample liquid that contains interfering ions $J^-$, an ion exchange reaction occurs between the interfering ions $J^-$ in the sample liquid in the vicinity of the membrane, and $Cl^-$ in the membrane. This event changes from the phase (a) to the phase (b) in FIG. 11A, with the lapse of time after the liquid is laid still.

In an exemplary case where $J^-$ represents bicarbonate ion ($HCO_3^-$), the ion-sensitive membrane is more likely to respond to $Cl^-$ than $HCO_3^-$. Hence, upon exchange of $HCO_3^-$ in the sample liquid in the vicinity of the surface of the ion exchange membrane 1 with $Cl^-$, the ion-sensitive membrane will judge (detect) that the ion concentration of the sample liquid is elevated. Due to negativity of the slope sensitivity of the anion-selective electrode (potential difference that appears upon elevation of concentration of the target ion to be measured by one digit in FIG. 10: for example, the theoretical value of the slope sensitivity under change of the target to be measured from 10 mM NaCl to 100 mM NaCl is approximately -59 mV/decade at room temperature), the potential lowers as the exchange reaction of $J^-$ with $Cl^-$ proceeds in the sample liquid (see section (d) and (e) in FIG. 10). Re-introduction of the same sample liquid will refresh the sample liquid, causing the similar event to recur. Note although $HCO_3^-$ also flows into the ion exchange membrane 1, this is not considered to largely affect the membrane performance, since there is a high concentration of $Cl^-$ in the ion exchange membrane 1.

For example, in a case where the sample liquid that contains a hydrophobic ion such as $Br^-$ or $SCN^-$ whose selectivity is higher than that of $Cl^-$ is introduced, that is, if $J^-$ represents $Br^-$ or $SCN^-$, exchange of $Br^-$ or $SCN^-$ in the sample liquid in the vicinity of the membrane surface with $Cl^-$, will conversely elevate the potential (see sections (f) and (g) in FIG. 10).

On the other hand, the ion-selective electrode 10 having the inert layer 5 (as in the first and second embodiments) can prevent the event illustrated in FIG. 11A. FIG. 11B is a schematic drawing illustrating ion compositions inside the ion-sensitive membrane 17 of the ion-selective electrode 10 having the inert layer 5, and in the sample liquid. Since the surface of the ion-sensitive membrane 17 is covered with the inert layer 5, the ion exchange reaction between the ion exchange membrane 1 and the sample liquid is suppressed, whereby the potential change ascribed to the ion exchange reaction as in Comparative Example 1 will be less likely to occur.

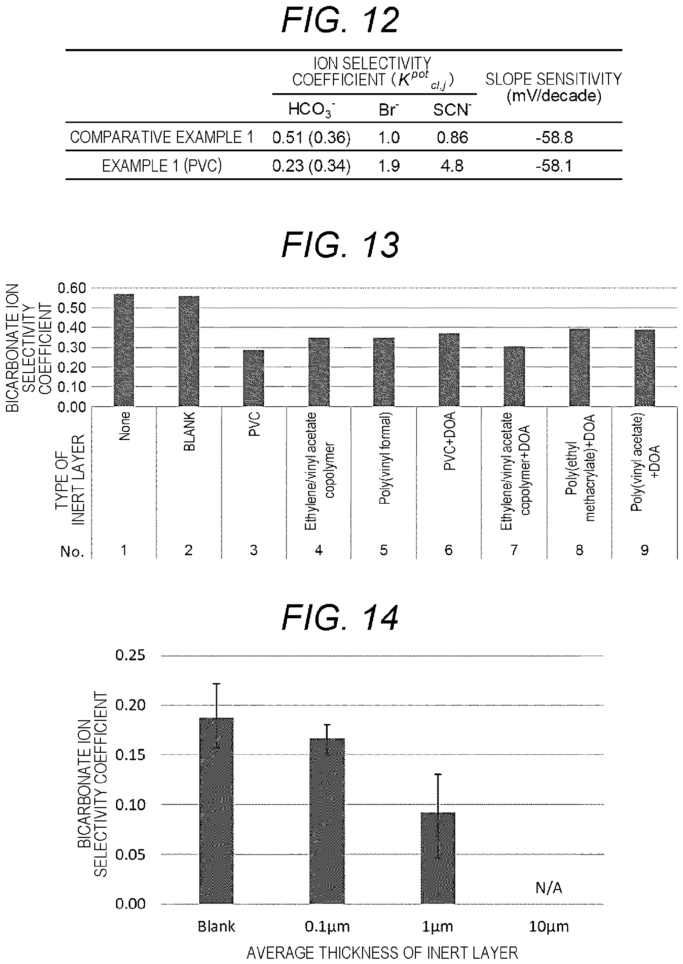

FIG. 12 is a chart summarizing calculation results of a slope, and ion selectivity coefficients of the individual interference ions against chlorine ion (Cl⁻) (numerical value that represents to what level the interfering ion responds, assuming the level of chlorine ion as 1), derived from potential values relatively stabilized as seen in FIG. 10 after the second introduction of the individual sample liquids. Numerical values in the parentheses denote the calculated results of selectivity at an ion concentration of 100 mM. The slope sensitivity was almost the same in both the ion-selective electrode 10 (first embodiment) structured as illustrated in FIG. 2, and the ion-selective electrode structured as illustrated in FIG. 7 (Comparative Example 1). As for the selectivity coefficient, the structure according to the first embodiment, when compared with Comparative Example 1, was found to demonstrate a lower selectivity for $HCO_3^-$ ion which is a hydrophilic ion, whereas a higher selectivity coefficient for $Br^-$ or $SCN^-$ which are hydrophobic ions. This is because in Comparative Example 1, the ion exchange reaction changes the ion composition of the sample solution in the vicinity of the membrane, resulting in blunted values for the actual measurement of the selectivity coefficients, whereas the structure of the first embodiment allows the inert layer to suppress the ion exchange reaction, resulting in measured values close to the original selectivity coefficients of the ion-sensitive membrane 17. This is believed to be the reason. Comparative Example 1 and the first embodiment gave close values of the $HCO_3^-$ selectivity at 100 mM. This is supposedly because the high ion concentration of the liquid relatively reduced influence of an ion flux, thereby masking the difference ascribed to the presence or absence of the inert layer.

Note that the $SCN^-$ selectivity coefficient fallen below 1 in Comparative Example 1 is possibly ascribed to a change in the membrane characteristic caused by incorporation of $SCN^-$ into the ion exchange membrane 1, or an influence of diffusion potential in the ion exchange membrane 1.

As described above, unlike a common liquid film-type ion-sensitive membrane having a low density of fixed charge, a membrane having a high density of fixed charge, like the ion exchange membrane 1 of this embodiment, can quickly exchange ions with the liquid. As described in the embodiment of the present disclosure, formation of the inert layer 5 so as to cover the face of the ion exchange membrane 1 makes it possible to suppress the ion exchange reaction, and to bring the ion selectivity of the ion-sensitive membrane 17 close to its inherent level.

<Exemplary Measurement 2>

The ion-selective electrode structured as in Comparative Example 1 (see FIG. 7), and the ion-selective electrode structured as in the first embodiment (see FIG. 2) were subjected to measurement of bicarbonate ion ($HCO_3^-$) selectivity coefficient relative to chlorine ion (Cl-). FIG. 13 is a diagram illustrating the measurement results. The bicarbonate ion selectivity coefficient was evaluated by a so-called mixed solution method, with use of a sample liquid obtained by adding an interfering ion to a standard solution. The chlorine ion-selective electrode preferably has a small ion selectivity coefficient for bicarbonate ion, which is the interfering ion. A measuring device employed herein was a high-throughput automatic analyzer. This analyzer is designed to analyze the specimen after diluted.

In FIG. 13, No. 1 represents a bicarbonate ion selectivity coefficient of an electrode equipped with a membrane formed of the ion exchange membrane 1 remained untreated (electrode structure of Comparative Example 1). No. 2 represents a bicarbonate ion selectivity coefficient of an electrode equipped with a membrane formed of the ion exchange membrane 1 whose surface was coated only with THF (polymer-free) and then dried (equivalent to the electrode structure of Comparative Example 1).

No. 3 to No. 9 represent bicarbonate ion selectivity coefficients of electrodes equipped with membranes formed of the ion exchange membrane 1 whose surface was coated with a THF solution having dissolved therein PVC, ethylene/vinyl acetate copolymer, poly(vinyl formal), PVC + DOA, ethylene/vinyl acetate copolymer + DOA, poly(ethyl methacrylate) + DOA, and poly(vinyl acetate) + DOA, respectively, and then dried (electrode structure of the first embodiment).

It is understood from FIG. 13, that the electrodes No. 3 to No. 9 structured as in the first embodiment demonstrated the bicarbonate ion selectivity coefficients smaller than those of the electrodes No. 1 and No. 2 structured as in Comparative Example 1, thus proving improved performance. By thus forming the inert layer 5 on the surface of the ion exchange membrane 1, it now becomes possible to bring out the ion selectivity of the ion-sensitive membrane 17 close to its inherent level, regardless of the type of material used for the inert layer 5.

Although not illustrated, in an exemplary case where the ion-selective electrode 10 was assembled while inverting the ion-sensitive membrane 17 structured as in the first embodiment, so as to direct the face covered with the inert layer 5 to the internal gel 16, the ion-selective electrode 10 was found to demonstrate a bicarbonate ion selectivity coefficient obviously larger than that demonstrated by the electrode having the face covered with the inert layer 5 directed to the sample liquid. The inert layer 5 is, therefore, judged to be effective when formed between the ion exchange membrane 1 and the sample liquid.

<Exemplary Measurement 3>

The ion-selective electrode structured as in Comparative Example 2 (see FIG. 8), and the ion-selective electrode structured as in the second embodiment (see FIG. 6) were subjected to measurement of bicarbonate ion ($HCO_3^-$) selectivity coefficient relative to chlorine ion (Cl-). FIG. 14 is a diagram illustrating the measurement results. The bicarbonate ion selectivity coefficient was evaluated by a so-called mixed solution method, with use of a sample liquid obtained by adding an interfering ion to a standard solution. The chlorine ion-selective electrode preferably has a small ion selectivity coefficient for bicarbonate ion, which is the interfering ion. A measuring device employed herein was a high-throughput automatic analyzer. This analyzer is designed to analyze the specimen after diluted. PVC was used as the material of the inert layer 5 structured as in the second embodiment. Five each electrodes were manufactured while varying the average thickness among 0.1 $\mu$m, 1 $\mu$m, and 10 $\mu$m. FIG. 14 summarizes average values of the bicarbonate ion selectivity coefficients in a bar graph, with the individual maximum values and the minimum values indicated by error bars.

In FIG. 14, Blank represents a result that corresponds to the ion-selective electrode structured as in Comparative Example 2. That is, Blank relates to a membrane formed of the anion exchange membrane 1 having formed thereon a condensate layer 2 of MPDA and formaldehyde, but free of the inert layer. The bicarbonate ion selectivity coefficient of the ion-selective electrode was found to be approximately 0.19. The ion-sensitive membrane 17 (structured as in the second embodiment), formed of this ion-sensitive membrane having formed thereon the inert layer 5 with an average thickness of 0.1 $\mu$m, was found to demonstrate a bicarbonate ion selectivity coefficient, which was not found to largely differ from that of the ion-sensitive membrane not covered with the inert layer 5 (corresponded to Comparative Example 2).

On the other hand, the ion-sensitive membrane 17, having formed thereon the inert layer 5 with an average thickness of 1 $\mu$m, demonstrated a bicarbonate ion selectivity coefficient of approximately 0.09, proving a great improvement. The ion-sensitive membrane 17 in which the thickness of the inert layer 5 was increased up to 10 $\mu$m, however, failed to demonstrate proper ion response due to excessively large thickness of the inert layer 5, demonstrating an irregular value of the slope sensitivity.

It was considered from these measurement results that a thickness of 0.1 $\mu$m or smaller was insufficient for the inert layer 5 to exhibit a function of suppressing the ion exchange reaction, meanwhile a thickness of 10 $\mu$m or larger prevented the ion exchange membrane 1 to express its ion response characteristic, due to excessively large thickness of the inert layer 5. Therefore, it is understood that the thickness of the inert layer 5 preferably falls in the range from 0.1 to 10 $\mu$m, for the purpose of improving the ion selectivity.

Although not illustrated, the ion-sensitive membrane 17, having formed thereon the inert layer 5 with an average thickness of 1 $\mu$m, was found to keep the effect of the inert layer 5 unchanged even after storage, and to keep the selectivity coefficient at a low level, as compared with the ion-sensitive membrane (Comparative Examples) not covered with the inert layer 5. As described above, the inert layer 5 can exhibit the effect even after long-term storage.

From these results, the effect of the present disclosure, focused on improvement of the ion selectivity, was successfully confirmed through formation of the inert layer 5, also on the ion-sensitive membrane 17 derived from the ion exchange membrane 1 subjected to the treatment for improving the selectivity.

(6) Summary

The ion-sensitive membrane in the ion-selective electrode according to each embodiment is in contact with the sample liquid in at least a part of the first face, and is in contact with the internal gel (internal liquid) in at least a part of the second face different from the first face (opposite to the first face). The first face of the ion-sensitive membrane is covered with an inert layer that suppresses an ion exchange reaction between the ion-sensitive membrane and the sample liquid. The target ions to be measured, contained herein in the sample liquid, are various anions and various cations. For example, Br-, I-, CN-, $Cd^{2+}$, $Cu^{2+}$, $Ag^+$, $S^{2-}$, F-, $K^+$, $Ca^{2+}$, $NO_3^-$, $NH_4^+$, $Na^+$, and the like may be measured. With such structure, the ion-selective electrode based on the ion exchange membrane (ion-exchange resin) 1 having a high density of fixed charge can improve the ion selectivity and temporal stability, by adding a structure (inert layer) that can be manufactured by a simple process. The ion-selective electrode thus structured is also suitable for an automatic analyzer allowed for consecutive measurement with high throughput, by which the analysis accuracy and reliability of the measurement of ion concentration measurement may further be improved.

The ion-selective electrode is based on an ion exchange membrane (ion-exchange resin) 1 with a high density of fixed charge. The charge density of the fixed charge herein may be 0.1 mmol/g or larger.

On the other hand, if the ion concentration in the sample liquid is low, even a minute ion exchange event between the ion exchange membrane and the sample liquid will influence the measured value. Such influence will occur even if the ion-sensitive membrane has a moderate charge density, rather than a high charge density as described previously. Even in such system, the effect of the present invention is exerted by providing the inert layer.

The inert layer may be formed of a non-ion-responsive material. The non-ion-responsive material may be exemplified by insulating material. The insulating material is exemplified by polymer material (polymer that contains carbon and hydrogen, or material that contains at least either element of chlorine or oxygen). The charge density of the inert layer may be set to 0.001 mmol/g or smaller. The inert layer has a part whose thickness is 0.10 $\mu$m or larger and 10 $\mu$m

or smaller. With the thickness of the inert layer fallen within this range, it now becomes possible to suppress the ion exchange reaction while keeping the ion response reliable.

The ion-sensitive membrane may be constituted by the ion exchange membrane 1, the treated layer (e.g., the MPDA condensate layer) 2 for improving the ion selectivity formed on both faces of the ion exchange membrane 1 (the first face directed to the sample, and the second face directed to the internal liquid), and the inert layer 5 formed on the condensate layer on the first face (second embodiment). With such structure, the ion selectivity of the ion-sensitive membrane 17 per se may further be improved.

Reference Signs List

1, 21 ion exchange membrane
2 MPDA condensate layer
**5,** 26 inert layer
11, 22 electrode casing
12 flow channel
13, 24 internal electrode
15 packing
16, 23 internal gel
17 ion-sensitive membrane
18, 25 lid
100 electrolyte concentration measuring device
101 chlorine ion electrode
102 potassium ion electrode
103 sodium ion electrode
104 reference electrode
105 pinch valve
106 vacuum suction nozzle
107 sipper nozzle
108 diluent supply nozzle
109 internal standard solution supply nozzle
110 dilution tank
111 waste liquid tank
112 vacuum pump
120 liquid junction
121, 122, 123, 124, 125, 126, 127 solenoid valve
131 internal standard solution syringe pump
132 diluent syringe pump
133 sipper syringe pump
141 internal standard solution bottle
151 diluent bottle
161 reference electrode solution bottle
171 potential measurement unit
172 concentration calculation unit
174 output unit
175 device controller
176 input unit

**Claims**

1.   An ion-selective electrode for measuring a target ion contained in a sample liquid, the electrode comprising:

an electrode casing that stores an internal liquid;
an internal electrode partially in contact with the internal liquid; and
an ion-sensitive membrane that separates the sample liquid from the internal liquid, wherein
the ion-sensitive membrane is in contact with the sample liquid in at least a part of a first face, and is in contact with the internal liquid in at least a part of a second face different from the first face, and
the first face of the ion-sensitive membrane is covered with an inert layer that suppresses an ion exchange reaction between the ion-sensitive membrane and the sample liquid.

2. The ion-selective electrode according to claim 1, wherein
the ion-sensitive membrane has a charge density of 0.1 mmol/g or larger.

3. The ion-selective electrode according to claim 1, wherein
the ion-sensitive membrane contains an ion-exchange resin.

4. The ion-selective electrode according to claim 3, wherein
the ion-sensitive membrane has a treated layer for improving ion selectivity, at least at a part of the first face in contact with the sample, and has the inert layer formed on the treated layer on the first face side.

5. The ion-selective electrode according to claim 1, wherein
the inert layer is formed of a non-ion-responsive material.

6. The ion-selective electrode according to claim 1, wherein
the inert layer has a charge density of 0.001 mmol/g or smaller.

7. The ion-selective electrode according to claim 1, wherein
the inert layer is formed of an insulating material.

8. The ion-selective electrode according to claim 1, wherein
the inert layer contains a polymer material.

9. The ion-selective electrode according to claim 8, wherein
the polymer material is a polymer that contains carbon and hydrogen.

10. The ion-selective electrode according to claim 8, wherein
the polymer material contains at least either element of chlorine or oxygen.

11. The ion-selective electrode according to claim 1, wherein
the inert layer has a part whose thickness is 0.10 $\mu$m or larger and 10 $\mu$m or smaller.

12. The ion-selective electrode according to claim 1, wherein
the target ion is an anion.

13. The ion-selective electrode according to claim 12, wherein
the target ion is chlorine ion.

14. The ion-selective electrode according to claim 1, wherein
the target ion is a cation.

15. An electrolyte concentration measuring device comprising:

the ion-selective electrode according to claim 1; and
a concentration calculation unit configured to calculate concentration of the target ion, with reference to information on potential measured with use of the ion-selective electrode.

# FIG. 1A

# FIG. 1B

## FIG. 1C

## FIG. 2

# FIG. 3

# FIG. 4

| DEVICE START-UP | S201 |

↓

| SET ELECTRODE | S202 |

↓

| SET REAGENT BOTTLE | S203 |

↓

| REAGENT PRIMING | S204 |

↓

| MEASURE INTERNAL STANDARD SOLUTION | S205 |

↓

| MEASURE STANDARD SOLUTION L, H, AND CALCULATE SLOPE | S206 |

↓

| CALCULATE CONCENTRATION OF INTERNAL STANDARD SOLUTION | S207 |

*FIG. 5*

```
┌─────────────────────────────────────────────┐
│        START MEASUREMENT OPERATION           │──── S301
└─────────────────────────────────────────────┘
                      │
                      ▼
┌─────────────────────────────────────────────┐
│  INTRODUCE INTERNAL STANDARD SOLUTION        │──── S302
│  INTO MEASUREMENT FLOW CHANNEL               │
└─────────────────────────────────────────────┘
                      │
                      ▼
┌─────────────────────────────────────────────┐
│             MEASURE POTENTIAL                │──── S303
└─────────────────────────────────────────────┘
                      │
                      ▼
┌─────────────────────────────────────────────┐
│           INTRODUCE SPECIMEN                 │──── S304
│     INTO MEASUREMENT FLOW CHANNEL            │
└─────────────────────────────────────────────┘
                      │
                      ▼
┌─────────────────────────────────────────────┐
│             MEASURE POTENTIAL                │──── S305
└─────────────────────────────────────────────┘
                      │
                      ▼
┌─────────────────────────────────────────────┐
│         RECEIVE POTENTIAL VALUE              │──── S306
│   AT CONCENTRATION CALCULATION UNIT          │
└─────────────────────────────────────────────┘
                      │
                      ▼
┌─────────────────────────────────────────────┐
│         CALCULATE CONCENTRATION              │──── S308
└─────────────────────────────────────────────┘
                      │
                      ▼
┌─────────────────────────────────────────────┐
│       DISPLAY RESULT OF MEASUREMENT          │──── S309
└─────────────────────────────────────────────┘
                      │
                      ▼
              ◇─────────────◇
      YES     │   MEASURE    │──── S310
  ◀───────────│ NEXT SPECIMEN│
              ◇─────────────◇
                      │ NO
                      ▼
┌─────────────────────────────────────────────┐
│           END OF MEASUREMENT                 │──── S311
└─────────────────────────────────────────────┘
```

*FIG. 6*

# FIG. 7

# FIG. 8

# FIG. 9

# FIG. 10

# FIG. 11A

PHASE (a)  PHASE (b)

ION EXCHANGE MEMBRANE

SAMPLE LIQUID

# FIG. 11B

ION EXCHANGE MEMBRANE

INERT LAYER

SAMPLE LIQUID

## FIG. 12

| | ION SELECTIVITY COEFFICIENT ($K^{pot}_{cl,j}$) | | | SLOPE SENSITIVITY (mV/decade) |
|---|---|---|---|---|
| | $HCO_3^-$ | $Br^-$ | $SCN^-$ | |
| COMPARATIVE EXAMPLE 1 | 0.51 (0.36) | 1.0 | 0.86 | -58.8 |
| EXAMPLE 1 (PVC) | 0.23 (0.34) | 1.9 | 4.8 | -58.1 |

## FIG. 13

## FIG. 14

# INTERNATIONAL SEARCH REPORT

| International application No. |
|---|
| **PCT/JP2023/038452** |

| A. | CLASSIFICATION OF SUBJECT MATTER |
|---|---|

*G01N 27/333*(2006.01)i; *G01N 27/416*(2006.01)i
FI:  G01N27/333 331C; G01N27/333 331F; G01N27/416 351J; G01N27/416 351A; G01N27/416 351K

According to International Patent Classification (IPC) or to both national classification and IPC

| B. | FIELDS SEARCHED |
|---|---|

Minimum documentation searched (classification system followed by classification symbols)

G01N27/333; G01N27/416

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII); Scopus

| C. | DOCUMENTS CONSIDERED TO BE RELEVANT |
|---|---|

| Category* | Citation of document, with indication, where appropriate, of the relevant passages | Relevant to claim No. |
|---|---|---|
| X | Microfilm of the specification and drawings annexed to the request of Japanese Utility Model Application No. 015068/1980 (Laid-open No. 117355/1981) (OLYMPUS OPTICAL CO., LTD.) 08 September 1981 (1981-09-08), p. 2, 3rd to 4th paragraphs, p. 4, 2nd paragraph to p. 5, 2nd paragraph, fig. 2-3 | 1, 5-11, 14-15 |
| A | entire text, all drawings | 2-4, 12-13 |
| X | JP 58-186038 A (TOKYO SHIBAURA ELECTRIC CO) 29 October 1983 (1983-10-29) column 1, 3rd paragraph, column 2, 2nd paragraph, column 4, 2nd paragraph, column 4, 5th paragraph to column 5, 2nd paragraph, fig. 1-2 | 1, 5-10, 14-15 |
| X | JP 2000-329728 A (HITACHI LTD) 30 November 2000 (2000-11-30) paragraphs [0002]-[0003], [0018]-[0020], [0025], fig. 1 | 1-10, 12-13, 15 |
| A | 糸井滋, イオン交換樹脂膜の性能評価法, 膜, 1981, vol. 6, no. 3, pp. 47-58 p. 54, table 1, (ITOI, Shigeru. Properties Evaluating Method of the Ion-exchange Membrane. Membrane.) | 1-10, 12-13, 15 |
| X | JP 10-318973 A (HITACHI LTD) 04 December 1998 (1998-12-04) paragraphs [0005], [0009], [0017], fig. 1 | 1-3, 8-10, 12-13 |

☑ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 November 2023** | **05 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

International application No.

**PCT/JP2023/038452**

### C.    DOCUMENTS CONSIDERED TO BE RELEVANT

| Category* | Citation of document, with indication, where appropriate, of the relevant passages | Relevant to claim No. |
|---|---|---|
| A | JP 36-15258 A (ASAHI GLASS CO LTD) 04 September 1961 (1961-09-04)<br>p. 1, left column, 2nd paragraph, p. 1, right column, 2nd paragraph, p. 2, left column, 1st paragraph, p. 2, right column, 1st paragraph to p. 3, left column, 2nd paragraph | 1-3, 8-10, 12-13, 15 |
| A | JP 10-10078 A (HITACHI LTD) 16 January 1998 (1998-01-16)<br>paragraph [0017] | 1-15 |
| P, X | KISHIOKA, A. et al. Detection of Interfering Ions Using Ion Flux Phenomena in Flow-Through Cl-ISEs with Ion Exchange Membranes. Anal. Chem. 04 May 2023, vol. 95, pp .7584-7593, doi.org/10.1021/acs.analchem.3c00366<br>entire text, all drawings | 1-3, 5-13, 15 |

Form PCT/ISA/210 (second sheet) (January 2015)

27

**INTERNATIONAL SEARCH REPORT**
Information on patent family members

International application No.

**PCT/JP2023/038452**

| Patent document cited in search report | | | Publication date (day/month/year) | Patent family member(s) | Publication date (day/month/year) |
|---|---|---|---|---|---|
| JP | 56-117355 | U1 | 08 September 1981 | (Family: none) | |
| JP | 58-186038 | A | 29 October 1983 | (Family: none) | |
| JP | 2000-329728 | A | 30 November 2000 | (Family: none) | |
| JP | 10-318973 | A | 04 December 1998 | (Family: none) | |
| JP | 36-15258 | A | 04 September 1961 | (Family: none) | |
| JP | 10-10078 | A | 16 January 1998 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3812049 B

- JP 6783704 B